# EUROPÄISCHE PATENTSCHRIFT

(11) **EP 2 698 648 B1**
(45) Veröffentlichungstag und Bekanntmachung des Hinweises auf die Patenterteilung: **30.10.2019**
(21) Anmeldenummer: 13179175.8
(22) Anmeldetag: 02.08.2013
(51) Int. Cl.: G01S 13/91, G01S 7/41, G08G 1/015

(54) **Verfahren zur Klassifizierung von fahrenden Fahrzeugen**
Method for classifying vehicles in motion
Procédé de classification de véhicules roulants

(30) Priorität: 14.08.2012 DE 102012107445
(43) Veröffentlichungstag der Anmeldung: 19.02.2014
(73) Patentinhaber: Jenoptik Robot GmbH, 40789 Monheim (DE)
(72) Erfinder: Lehning, Michael, 31137 Hildesheim (DE); Pröfrock, Dima, 22589 Hamburg (DE)
(74) Vertreter: Waldauf, Alexander

(56) Entgegenhaltungen:
- EP-A1- 1 990 654
- DE-A1- 3 810 357
- JIANXIN FANG ET AL: "A Low-cost Vehicle Detection and Classification System based on Unmodulated Continuous-wave Radar", INTELLIGENT TRANSPORTATION SYSTEMS CONFERENCE, 2007. ITSC 2007. IEEE, IEEE, PI, 30. September 2007 (2007-09-30), Seiten 715-720, XP031151484, ISBN: 978-1-4244-1395-9

## Beschreibung

Die Erfindung betrifft ein Verfahren zur Klassifizierung von Fahrzeugen, wie es gattungsgemäß aus der Patentschrift EP 2 011 103 B1 bekannt ist.

Die Klassifizierung von Fahrzeugen im fließenden Verkehr weist ein breites Anwendungsspektrum auf. Insbesondere im Rahmen einer automatisierten Überwachung und Regelung des Straßenverkehrs kommt der automatischen Grobklassifizierung, zur Einteilung der Fahrzeuge in große und langsamere (LKW, Busse) und in kleinere und schnellere Fahrzeuge (PKW), eine besondere Bedeutung zu. Entsprechend der erfassten Fahrzeugklasse können beispielsweise nach Fahrzeugklassen differenziert Mautgebühren erhoben, Ampelanlagen geregelt oder Verkehrsverstöße geahndet werden.

In den aus dem Stand der Technik bekannten Verfahren zur Grobklassifizierung von Fahrzeugen erfolgt die Zuordnung zu einer Fahrzeugklasse häufig durch die Ermittlung der individuellen Fahrzeuglänge anhand des Ein- und Austritts eines Fahrzeugs in den Messbereich einer Messeinrichtung. Mittels Auswertverfahren kann aus den aufgenommenen Signalen mit ausreichender Sicherheit ein auswertbares Merkmal für die Fahrzeuglänge generiert werden, das eine Zuordnung der Fahrzeuge zur Klasse der Busse bzw. LKWs oder zur Klasse der PKWs gestattet. Hierzu bekannte Vorrichtungen arbeiten dabei entweder mit Induktionsschleifen, welche die Klassifizierung anhand der bei einer Überfahrt ermittelten Länge und Bodenfreiheit der Fahrzeuge durchführen, oder mit Radargeräten, welche die Klassifizierung anhand der Durchfahrt des Fahrzeugs durch den Kegel des Radarstrahls (Radarkegel) mittels einer aus der Durchfahrtsdauer und der Geschwindigkeit ermittelten Fahrzeuglänge durchführen.

In einem in der Offenlegungsschrift EP 1 990 654 A1 offenbarten Verfahren erfolgt die Ermittlung der Fahrzeuglänge durch ein im spitzen Winkel seitlich zur Fahrbahn aufgestelltes Radargerät. Anhand der beim Eintreten und Verlassen des Fahrzeugs ermittelten Entfernungspunkte und dem bekannten Aufstellwinkel kann die Länge der Durchfahrtsstrecke des Fahrzeugs durch den Radarkegel ermittelt werden. Aus der ermittelten Fahrzeuggeschwindigkeit und der Durchfahrtszeit kann die in dieser Zeit vom Fahrzeug zurückgelegte Gesamtstrecke ermittelt werden. Damit kann aus der Differenz der Gesamtstrecke und der Durchfahrtsstrecke die Fahrzeuglänge berechnet werden und durch einen Vergleich mit den für eine Klasse typischen Fahrzeuglängen das erfasste Fahrzeug klassifiziert werden. Fehlereinflüsse, die sich aus der gegenseitigen Verdeckung von Fahrzeugen ergeben, können mit diesem Verfahren nicht aufgelöst werden.

Bei einem in der Offenlegungsschrift DE 38 10 357 A1 beschriebenen Verfahren, erfolgt die Klassifizierung ebenfalls anhand der ermittelten Fahrzeuglänge. Dazu wird zunächst während der Durchfahrt eines Fahrzeuges durch den Radarkegel eines Radargerätes ein Dopplerecho aufgenommen und aus dessen Frequenzspektrum die Frequenz mit maximaler Amplitude ermittelt. Anhand dieser Frequenz wird eine Geschwindigkeit ermittelt. Aus der Geschwindigkeit und der Signaldauer des Dopplerechos kann dann die Fahrzeuglänge ermittelt werden. Die Messung der Fahrzeuglänge über die Signaldauer ist mit mehreren Fehlereinflüssen verbunden. Da die Radarstrahlung von einer von der Fahrzeuglänge abhängig großen Fläche reflektiert wird, wird die Signaldauer prinzipiell um die Fahrzeuglänge verfälscht erfasst. Weiterhin führen Abschattungen der schräg auf die Fahrzeuge gerichteten Radarstrahlung an Teilen der Fahrzeuge zu einer verfälschten Längenmessung. Zur Erhöhung der Genauigkeit der Längenmessung wird ein für jede Einflussgröße getrennt und empirisch ermittelter Korrekturfaktor verwendet. Die Klassifizierung erfolgt abschließend durch den Vergleich des korrigierten zeitlichen Verlaufs des Dopplerechos mit dem von gespeicherten und identifizierten Mustern. Letztendlich ist die ermittelte Fahrzeuglänge jedoch nur eine sehr grobe Schätzung, bei der es leicht zu fehlerhaften Klassifizierungsergebnissen kommen kann.

Eine hypothetische Möglichkeit, die Klassifikation von Fahrzeugen ohne eine unmittelbare Erfassung der Fahrzeuglänge durchzuführen, wird in der Patentschrift EP 2 011 103 B1 beschrieben. Mit einem Radargerät wird ein Radarstrahl entlang eines Verkehrsweges ausgerichtet. Es wird ein linear-frequenzmoduliertes CW-Radargerät verwendet, mit dem sich Geschwindigkeiten und Entfernungen von Verkehrsteilnehmern ermitteln lassen. Die von Verkehrsteilnehmern reflektierten Signale werden vom Rauschen separiert und in einer Datenverarbeitungseinrichtung ausgewertet. Als Ergebnis dieser Verarbeitung werden zwei Fourier-Transformationskoeffizienten erzeugt, wobei der eine Koeffizient eine Funktion der Entfernung und der andere Koeffizient eine Funktion der Geschwindigkeit der erfassten Verkehrsteilnehmer darstellt. Werden beide Funktionen in den zwei Dimensionen eines kartesischen Diagramms gegeneinander aufgetragen, entstehen für die unterschiedlichen Verkehrsteilnehmer charakteristische Muster. Die Zusammensetzung und Form dieser Muster ist dabei ein Maß für die Streuung der Geschwindigkeiten und Abstände der reflektierten Signale eines Verkehrsteilnehmers, deren statistische Auswertung eine Zuordnung von Verkehrsteilnehmern zu vordefinierten Klassen zulassen. Aufgrund des Messprinzips des linear-frequenzmodulierten CW-Radargeräts können jedoch keine Winkel erfassten Objekten zugeordnet werden. Damit ist es zwar möglich festzustellen, dass sich z. B. ein PKW oder ein LKW im Radarkegel befindet, jedoch kann diese Aussage, sofern sich mehrere Verkehrsteilnehmer gleichzeitig im Radarkegel befinden, nicht sicher zugeordnet werden.

Eine weitere Lösung (Fang et al., 2007, IET International Conference on Radar Systems, 1 - 4) berücksichtigt, dass Radarstrahlung in der Praxis an mehreren Stellen eines Fahrzeugs reflektiert wird und es zu entsprechenden Streuungen eines empfangenen Radarsignals kommt. Diese gestreuten Signale werden als Dopplerfrequenzen der reflektierenden Fahrzeugstellen über die Zeit erfasst. Dabei wird ein Bündel von Dopplerfrequenzverläufen erhalten, die mittels der Hough-Transformation räumlichen Koordinaten zugeordnet werden können. Mittels dieser räumlichen Koordinaten und deren relativen Beziehungen zueinander ist eine Zuordnung des jeweils angemessenen Fahrzeugs mit hoher Zuverlässigkeit einer bestimmten Größenklasse zuordenbar.

Es ist die Aufgabe der Erfindung ein Verfahren zu finden, das geeignet ist, mehrere einen Radarkegel durchfahrende Fahrzeuge gleichzeitig und sicher zu klassifizieren.

Diese Aufgabe wird für ein Verfahren zum Klassifizieren von Fahrzeugen, bei dem Fahrzeuge beim Durchfahren eines durch Radarstrahlung gebildeten Radarkegels angemessen werden, indem die mit Radarstrahlung beaufschlagten Oberflächen der Fahrzeuge die Radarstrahlung reflektieren und Messsignale mit Frequenzen entsprechend der Dopplerverschiebung generieren, mit folgenden Verfahrensschritten gelöst.

Es wird ein winkelauflösendes Radargerät, welches Messsignale mit Frequenzen entsprechend der Dopplerverschiebung liefert, aus denen Radialentfernungen, Objektwinkel und Radialgeschwindigkeiten ableitbar sind, in einer Aufstellhöhe zur Fahrbahnoberfläche einer Fahrbahn sowie einem horizontalen spitzen Aufstellwinkel zu einem Fahrbahnrand der Fahrbahn angeordnet.

Dieses Radargerät sendet eine einen Radarkegel bildende Radarstrahlung aus und es werden zu mehreren Messzeitpunkten in einer Messzeit, Messsignale kommend von wenigstens einem den Radarkegel durchfahrenden und damit angemessenen Fahrzeug erfasst.

Es werden die Frequenzen der erfassten Messsignale der angemessenen Fahrzeuge als Funktionen über die Messzeit abgespeichert und aus diesen ein Spektrogramm pro Fahrzeug gebildet.

Anschließend werden die Spektrogramme auf Bewertungsbereiche mit maximaler Bandbreite der Frequenz überprüft und diese Bewertungsbereiche mit Bewertungsbereichen vorgegebener und abgespeicherter Spektrogramme für verschiedene Fahrzeugklassen verglichen. Die angemessenen Fahrzeuge werden dann jeweils der Fahrzeugklasse zugeordnet, für die das vorgegebene Spektrogramm abgespeichert vorliegt, welches dem gebildeten Spektrogramm am nächsten kommt. Dabei kann der Vergleich sich darauf beschränken, dass die maximalen Bandbreiten der gebildeten Spektrogramme mit den maximalen Bandbreiten der vorgegebenen, abgespeicherten Spektrogramme verglichen werden. Im Bewertungsbereich wird wenigstens ein Messzeitpunkt als ein Bewertungszeitpunkt festgelegt.

Vorteilhaft werden aus den Messsignalen zu wenigstens einem der Bewertungszeitpunkte innerhalb der Bewertungsbereiche mit maximaler Bandbreite, jeweils Objektwinkel abgeleitet, die für den betreffenden Bewertungszeitpunkt jeweils als Funktion über die Frequenz abgespeichert werden und der Verlauf der Funktion mit für verschiedene Fahrzeugklassen abgespeicherten Vergleichsmodellen verglichen wird, um die Klassifizierung der Fahrzeuge zu verifizieren.

Alternativ werden vorteilhaft aus den Messsignalen zu wenigstens einem der Bewertungszeitpunkte innerhalb der Bewertungsbereiche mit maximaler Bandbreite, jeweils Radialentfernungen abgeleitet, die für den betreffenden Bewertungszeitpunkt jeweils als Funktion über die Frequenz abgespeichert werden und der Verlauf der Funktionen mit für verschiedene Fahrzeugklassen abgespeicherten Vergleichsmodellen verglichen werden, um die Klassifizierung der Fahrzeuge zu verifizieren.

Es ist von Vorteil, wenn aus den Messsignalen zu wenigstens einem der Bewertungszeitpunkte innerhalb der Bewertungsbereiche mit maximaler Bandbreite, Signalamplituden der Messsignale für den betreffenden Bewertungszeitpunkt jeweils als Funktion über die Frequenz abgespeichert werden und der Verlauf der Funktionen mit für verschiedene Fahrzeugklassen abgespeicherten Vergleichsmodellen verglichen werden, um die Klassifizierung der Fahrzeuge zu verifizieren.

Vorteilhaft erfolgt aus dem Vergleich aller gebildeten Funktionen mit abgespeicherten Vergleichsmodellen eine Modellierung der Fahrzeuggröße.

Es ist von Vorteil bei der Bildung einer jeden Funktion eine Wahrscheinlichkeitsverteilung für verschiedene Fahrzeuggrößen zu bestimmen und diese Wahrscheinlichkeiten über den gesamten zeitlichen Verlauf gewichtet zu akkumulieren.

Nachfolgend soll die Erfindung anhand von Ausführungsbeispielen näher erläutert werden. In den zugehörigen Zeichnungen zeigen:
Fig. 1: eine schematische Darstellung einer Anordnung des Radargeräts neben der Fahrbahn,
Fig. 2: Spektrogramme mehrerer in einem Messzeitraum angemessener Fahrzeuge,
Fig. 3a: die prinzipielle Herleitung der Frequenzspektren der Signalkomponenten aus den Messsignalen eines Punktreflektors,
Fig. 3b: die prinzipielle Herleitung der Frequenzspektren der Signalkomponenten aus den Messsignalen eines überwiegend frontal erfassten Fahrzeugs,
Fig. 3c: die prinzipielle Herleitung der Frequenzspektren der Signalkomponenten aus den Messsignalen eines überwiegend seitlich erfassten Fahrzeugs,
Fig. 4: ein Beispiel einer Klassifizierung eines PKW und eines LKW anhand von klassifizierten Vergleichsmodellen.

Für das Verfahren zum Klassifizieren eines oder auch zum gleichzeitigen Klassifizieren mehrerer sich auf einer Fahrbahn 2 fortbewegender Fahrzeuge 3 wird als ein winkelauflösendes Radargerät 1, ein FSK-Radargerät, eine Sonderform des aus dem Stand der Technik bekannten FMCW-Radars, verwendet. Mit dem FSK-Radargerät 1 können gleichzeitig mehrere Fahrzeuge 3 erfasst und auch verfolgt (Tracking) werden. Ein FSK-Radar 1 (FSK = Frequency Shift Keying) sendet eine Radarstrahlung 11 auf mindestens zwei alternierenden Trägerfrequenzen aus bzw. nimmt von erfassten Fahrzeugen 3 verursachte Reflexionen der mindestens zwei alternierenden Trägerfrequenzen wieder auf. Durch die Auswertung von Frequenzverschiebungen zwischen und innerhalb der beiden von den Fahrzeugen 3 reflektierten Trägerfrequenzen, wird innerhalb kurzer Zeit eine räumliche Auflösung zwischen mehreren Fahrzeugen 3 entsprechend deren Radialentfernungen RE, Radialgeschwindigkeiten und Objektwinkeln γ gegenüber dem Radargerät 1 ermöglicht.

Verschiedene Verfahren und dazu geeignete Vorrichtungen zum Ableiten der genannten Parameter aus den Radarsignalen sind aus dem Stand der Technik bekannt, wie z. B. die in der DE 10 2004 040 015 B4 beschriebene Planarantenne mit zwei getrennten Empfangsflächen.

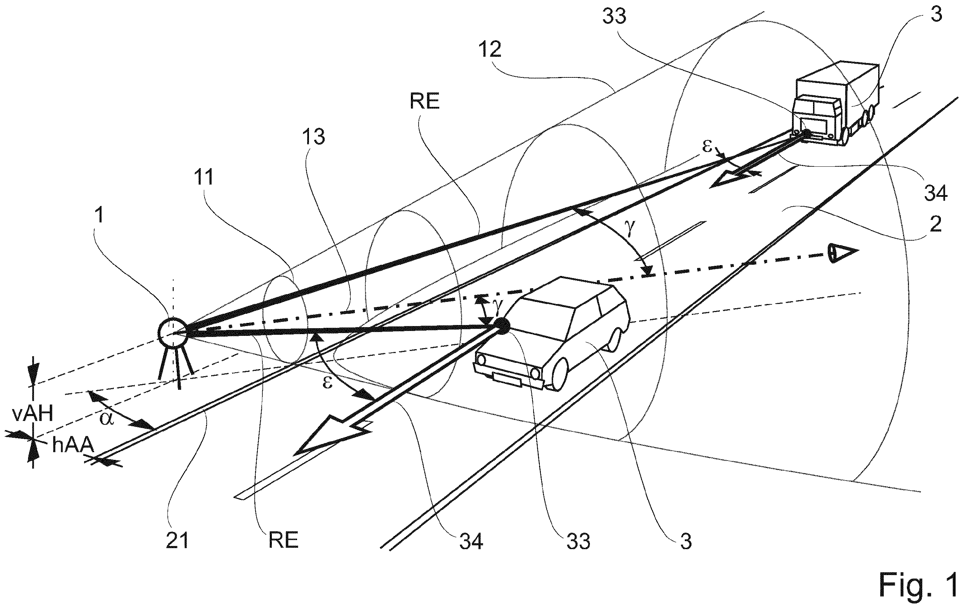

In Abhängigkeit von den Abstrahleigenschaften des Radargeräts 1 bildet die Radarstrahlung 11, wie in **Fig. 1** dargestellt, einen vom Radargerät 1 ausgehenden und sich aufweitenden Radarkegel 12, mit einer Symmetrieachse 13. Die Ausrichtung des Radargeräts 1 und damit des Radarkegels 12 gegenüber der Fahrbahn 2 kann anhand der Orientierung der Symmetrieachse 13 beschrieben und eingestellt werden. Der Radarkegel 12 wird so auf die Fahrbahn 2 gerichtet, dass die Fahrzeuge 3 an einem vom Radargerät 1 entfernten Ort (nahezu frontal) bis zu einem nahe am Radargerät 1 befindlichen Ort (nahezu seitlich) mit Radarstrahlung 11 beaufschlagt werden. An dem entfernten Ort tritt das Fahrzeug 3 in den Radarkegel 12 ein und am nahen Ort verlässt es den Radarkegel 12 wieder.

Die vom Radargerät 1 ausgesendete Radarstrahlung 11 wird an den mit Radarstrahlung 11 beaufschlagten und die Radarstrahlung 11 reflektierenden Oberflächen der Fahrzeuge 3 reflektiert und die reflektierte Radarstrahlung 11 wieder vom Radargerät 1 erfasst. Anhand der ausgesendeten und reflektierten Radarstrahlung 11 werden die Fahrzeuge 3 angemessen. Durch eine Relativbewegung der den Radarkegel 12 durchfahrenden Fahrzeuge 3 gegenüber dem Radargerät 1 erzeugen diese in der reflektierten Radarstrahlung 11 Dopplerverschiebungen aus denen das Radargerät 1 niederfrequente Messsignale 4 generiert die den Dopplerverschiebungen entsprechen und in Form von Dopplerfrequenzen f_{D} erfasst und ausgewertet werden. Die Auswertung der Messsignale 4 mittels des erfindungsgemäßen Verfahrens ermöglicht eine Klassifizierung der Fahrzeuge 3.

Zur Durchführung des Verfahrens wird in einem ersten Verfahrensschritt das Radargerät 1 so zur Fahrbahn 2 angeordnet, dass eine Radialgeschwindigkeit, eine Radialentfernung RE und ein Objektwinkel γ von sich auf das Radargerät 1 zu bewegenden Fahrzeugen 3 aufgenommen werden kann. Das Radargerät 1 wird dazu neben der Fahrbahn 2 angeordnet, sodass die Symmetrieachse 13 mit einem Fahrbahnrand 21 einen horizontalen spitzen Aufstellwinkel a einschließt. Weiterhin ist das Radargerät 1 in Bodennähe (z. B. in üblicher Höhe der Radachsen der Fahrzeuge 3), in einer bekannten vertikalen Aufstellhöhe vAH und mit einem vertikalen Aufstellwinkel (nicht dargestellt) der Symmetrieachse 13 zur Oberfläche der Fahrbahn 2, von üblicherweise 0° aufgestellt, sodass die Symmetrieachse 13 parallel zur Oberfläche der Fahrbahn 2 ausgerichtet ist.

In einer Ausführung des Verfahrens ist es auch möglich das Radargerät 1 direkt über der Fahrbahn 2, z. B. in Höhe einer die Fahrbahn 2 überspannenden Brücke anzubringen. In diesem Fall ist die Symmetrieachse 13 parallel zum Fahrbahnrand 21 und mit einem vertikalen Aufstellwinkel zur Oberfläche der Fahrbahn 2 orientiert. Die Fahrzeuge 3 werden somit an dem weit vom Radargerät 1 entfernten Ort, nahezu frontal bis zum nahe am Radargerät 1 liegenden Ort, nahezu von oben erfasst.

Die vom Radargerät 1 erfassten Messsignale 4 werden in Form der Dopplerfrequenzen f_{D} ausgegeben. Aus den Dopplerfrequenzen f_{D} werden direkt die Radialgeschwindigkeiten der angemessenen Fahrzeuge 3 ermittelt.

Zur vereinfachten Begriffsklärung wird das Fahrzeug 3, wie in Fig. 1 dargestellt, auf das Reflexionssignal eines idealen Punktreflektors 33 reduziert und das Radargerät 1 als eine punktförmige Quelle der Radarstrahlung 11 betrachtet, von der auch die Symmetrieachse 13 des Radarkegels 12 ausgeht. Der Fachmann weiß, dass es sich bei der Symmetrieachse 13 um die Sendeachse des Radargerätes 1 handelt, die parallel zu einer Achse der Empfängereinheit, auf die die Objektwinkel γ bezogen sind, verläuft. Der Abstand dieser Achsen kann jedoch vernachlässigt werden, weshalb die Symmetrieachse 13 als die eine Achse des Radargerätes 1 verstanden werden kann, auf die sowohl die Angaben zum Radarkegel 12 als auch die Objektwinkel γ bezogen werden können.

Die Radialentfernung RE des Fahrzeugs 3 entspricht damit dem direkten Abstand des Punktreflektors 33 zur punktförmigen Quelle. Sie wird unmittelbar aus einer Frequenzverschiebungsmessung zwischen den beiden Trägerfrequenzen des FSK-Radars 1 abgeleitet.

Die Radialgeschwindigkeit des Fahrzeugs 3 ist damit die Geschwindigkeit, mit der sich der Punktreflektor 33 in radialer Richtung auf die punktförmige Quelle zu bewegt. Die Radialgeschwindigkeit ist nur eine Geschwindigkeitskomponente einer realen Fahrzeuggeschwindigkeit, mit der sich das Fahrzeug 3 in einer Fahrtrichtung 34 auf der Fahrbahn 2 bewegt. Aufgrund des seitlich neben der Fahrbahn 2 aufgestellten Radargeräts 1 ist die Fahrtrichtung 34 des Fahrzeug 3 am Radargerät 1 vorbei gerichtet. Bei einer vektoriellen Betrachtung lässt sich die Fahrzeuggeschwindigkeit aus einer Addition einer radial zum Radargerät 1 ausgerichteten Geschwindigkeitskomponente (Radialgeschwindigkeit) und einer rechtwinklig dazu ausgerichteten Geschwindigkeitskomponente (Bahngeschwindigkeit) ermitteln. Die Radialgeschwindigkeit wird unmittelbar aus der Dopplerfrequenz f_{D} der vom Punktreflektor 33 reflektierten Radarstrahlung 11 abgeleitet.

Als Objektwinkel y wird der Winkel bezeichnet, der an der punktförmigen Quelle der Radarstrahlung 11 zwischen der Symmetrieachse 13 und einer Geraden zum Punktreflektor 33 aufgespannt wird. Die Ermittlung des Objektwinkels y erfolgt anhand zweier unterschiedlicher Phasenverschiebungen, der von der einen Senderfläche abgestrahlten Radarstrahlung 11, die an den beiden Empfängerflächen gemessen werden, nach dem Prinzip der Triangulationsrechnung.

Im Gegensatz zum idealen Punktreflektor 33 weist ein Fahrzeug 3 eine räumliche Ausdehnung mit einer Vielzahl räumlich verteilter und die Radarstrahlung 11 reflektierender Oberflächen auf, die wiederum eine Vielzahl von erfassbaren Punktreflektoren 33 bilden. Dementsprechend weist das für ein erfasstes Fahrzeug 3 aufgenommene Messsignal 4 auch eine Vielzahl von Dopplerfrequenzen f_{D} auf. Je nach Radialentfernung RE, Objektwinkel y und Fahrzeugwinkel ε des Fahrzeugs 3 werden an den Fahrzeugen 3 auch mehrere räumlich verteilte Reflexionen der Radarstrahlen 11 erfasst. Die Anzahl und Verteilung der Reflexionen an den Fahrzeugen 3 nimmt mit einer sich verringernden Radialentfernung RE zu, da aus der Perspektive des Radargeräts 1 auch die Größen der reflektierenden Oberflächen der Fahrzeuge 3 zunimmt. Für jede einzelne der erfassten Reflexionen kann die Radialentfernung RE, Radialgeschwindigkeit und der Objektwinkel y, differenziert nach deren räumlichen Anordnung an den Oberflächen des Fahrzeugs 3 abgeleitet werden.

In einem zweiten Verfahrensschritt wird die den Radarkegel 12 bildende Radarstrahlung 11 vom Radargerät 1 ausgesendet. Bei der Durchfahrt von wenigstens einem Fahrzeug 3 durch den Radarkegel 12 wird die Radarstrahlung 11 teilweise an den reflektierenden Oberflächen des Fahrzeugs 3 reflektiert und die Reflexionen vom Radargerät 1 als Messsignale 4 mit einer entsprechenden Signalamplitude SA erfasst. Die Erfassung der Messsignale 4 erfolgt in einer Messzeit t zu mehreren Messzeitpunkten.

Um einen ausreichenden Signal-Rausch-Abstand zu einem prinzipbedingt miterfassten Grundrauschen der Messsignale 4 herzustellen und die Eindeutigkeit bei der Erfassung der Messsignale 4 zu erhöhen, wird für die Signalamplituden SA sinnvollerweise ein Schwellwert festgelegt, den die Signalamplituden SA der erfassten Messsignale 4 überschreiten müssen, um bei einer nachfolgenden Signalverarbeitung berücksichtigt zu werden.

In einem dritten Verfahrensschritt werden die Messsignale 4 in Form der Dopplerfrequenzen f_{D} den Messzeitpunkten zugeordnet zwischengespeichert. Sie lassen sich über die Messzeit t auf einer Zeitachse aufgetragen. Alle erfassten Messsignale 4 eines angemessenen Fahrzeugs 3 lassen sich hierbei jeweils in Form eines zeitlichen Verlaufs der Dopplerfrequenzen f_{D} als Spektrogramm darstellen.

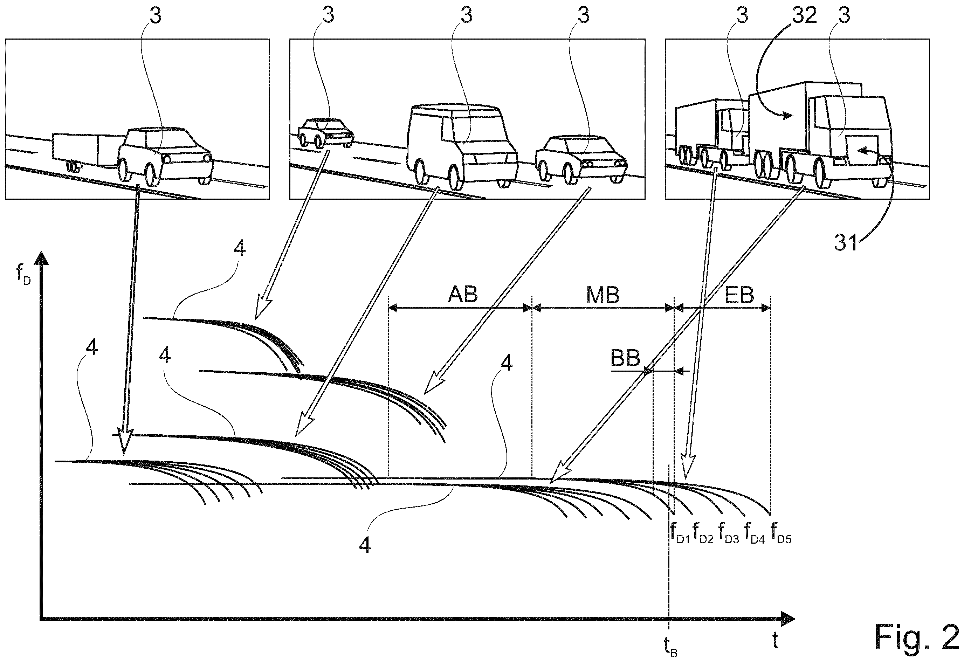

In **Fig. 2** sind Spektrogramme gebildet aus Messsignalen 4 von verschiedenen Fahrzeugen 3 dargestellt. Es ist erkennbar, dass die Spektrogramme charakteristische Formen aufweisen, die sich direkt den angemessenen Fahrzeugen 3 zuordnen lassen und sich in Abhängigkeit von der Größe der Fahrzeuge 3 in bestimmten Signalbereichen unterscheiden. Weiterhin weisen die Messsignale 4 im Spektrogramm eine unterschiedliche Lage auf. Da die gemessenen Dopplerfrequenzen f_{D} proportional der Radialgeschwindigkeit des Fahrzeugs 3 sind, werden die Messsignale 4 schnellerer Fahrzeuge 3 auf der Frequenzachse bei höheren Werten eingeordnet als die Messsignale 4 langsamerer Fahrzeuge 3. Diese Unterscheidung kann jedoch noch nicht zur Klassifizierung der Fahrzeuge 3 herangezogen werden, da theoretisch jedes Fahrzeug 3 auch mit jeder beliebigen Fahrzeuggeschwindigkeit bewegt werden könnte.

Anhand des zum spätesten Messzeitpunkt erfassten Fahrzeugs 3 (rechtes Spektrogramm in Fig. 2) soll, beispielhaft dessen Form beschrieben werden.

Die Erfassung von Messsignalen 4 beginnt, wenn das Fahrzeug 3 in den Radarkegel 12 eintritt. Der Eintritt erfolgt an dem vom Radargerät 1 entfernten Ort, sodass das Fahrzeug 3 nahezu frontal von der Radarstrahlung 11 erfasst wird. Die Radarstrahlung 11 wird deshalb im Wesentlichen an den Oberflächen einer Fahrzeugfront 31 reflektiert, die aus der Perspektive des Radargeräts 1 noch sehr klein ist. Die von dieser reflektierten Radarstrahlung 11 erfassten Dopplerfrequenzen f_{D} weisen daher eine geringe, noch undifferenzierte Spektralverteilung auf und die Messsignale ähneln damit den Messsignalen 4 des idealen Punktreflektors 33. Die Darstellung der Messsignale 4 im Spektrogramm zeigt deshalb bei frühen Messzeitpunkten, einen Anfangsbereich AB mit sehr geringer Spektralverteilung. Da an dem vom Radargerät 1 entfernten Ort die Bahngeschwindigkeit noch sehr gering ist, entspricht die Radialgeschwindigkeit in etwa der Fahrzeuggeschwindigkeit. Unter der Vorraussetzung, dass sich das Fahrzeug 3 während der Durchquerung des Radarkegels 12 mit konstanter Fahrzeuggeschwindigkeit entlang der Fahrbahn 2 bewegt, bleiben die Messsignale 4 im Spektrogramm ohne eine signifikante Änderung der Dopplerfrequenzen f_{D} nahezu konstant.

Da die Fahrtrichtung 34 des Fahrzeugs 3 am Radargerät 1 vorbei gerichtet ist, nimmt mit abnehmender Radialentfernung RE des Fahrzeugs 3 zum Radargerät 1 die Radialgeschwindigkeit, durch die zunehmende Bahngeschwindigkeit, ebenfalls ab. In einem Mittenbereich MB weist der Verlauf der Messsignale 4 deshalb zunächst eine leichte Krümmung in Richtung kleinerer Dopplerfrequenzen f_{D} mit einem kontinuierlich zunehmenden Abfall auf. Mit abnehmender Radialentfernung RE vergrößert sich, aus der Perspektive des Radargeräts 1, auch die reflektierende Oberfläche des Fahrzeugs 3. Weiterhin nimmt das Fahrzeug 3 bei abnehmender Radialentfernung RE einen anderen Objektwinkel γ zur Symmetrieachse 13 ein, sodass neben der Fahrzeugfront 31 auch zunehmend Oberflächen einer Fahrzeugflanke 32 zur Reflexion von Radarstrahlen 11 und damit zur Erzeugung von Dopplerfrequenzen f_{D} beitragen. Das Radargerät 1 kann somit eine größere Anzahl von Reflexionen mit einer größeren räumlichen Streuung auf den Oberflächen des Fahrzeugs 3 erfassen als zu früheren Messzeitpunkten. Die Dopplerfrequenzen f_{D}, die an den unterschiedlichen Oberflächen des räumlich ausgedehnten Fahrzeugs 3 erzeugt werden, weisen je nach deren Radialentfernung RE zum Radargerät 1 unterschiedliche Radialgeschwindigkeiten auf. Diese sehr geringen aber mit dem FSK-Radargerät 1 auflösbaren Unterschiede der Radialgeschwindigkeiten bzw. der gemessenen Dopplerfrequenzen f_{D} äußern sich im Spektrogramm in einer, mit Verringerung der Radialentfernung RE zum Radargerät 1 kontinuierlich zunehmenden Verbreiterung der Spektralverteilung der Dopplerfrequenzen f_{D}. Zum Ende der Durchfahrt durch den Radarkegel 12 befindet sich das Fahrzeug 3 nahe am Radargerät 1. Der Objektwinkel γ ist dadurch entsprechend groß, sodass am Fahrzeug 3 zum größten Teil die Oberflächen der Fahrzeugflanke 32 von der Radarstrahlung 11 erfasst werden. Aufgrund der Länge des Fahrzeugs 3 wird in dieser Position eine maximale räumliche Streuung der von der Fahrzeugfront 31 und Fahrzeugflanke 32 ausgehenden Reflexionen erreicht. Durch die stark differenzierte räumliche Streuung werden auch die Unterschiede der Radialgeschwindigkeiten bzw. der gemessenen Dopplerfrequenzen f_{D} maximal. Im Spektogramm zeigen die Messsignale 4 deshalb am Ende des Mittenbereichs MB, kurz vor Austritt des Fahrzeugs 3 aus dem Radarkegel 12 eine maximal mögliche Spektralverteilung.

Zur Darstellung der zunehmenden Spektralverteilung werden in Fig. 2 beispielhaft fünf Dopplerfrequenzen f_{D1} bis f_{D5} verwendet, mit denen die Vielzahl der an der Oberfläche des Fahrzeugs 3 erfassten Reflexionen verdeutlicht werden soll. Der zeitliche Verlauf der Messsignale 4 beginnt mit der Dopplerfrequenz f_{D1}, die an einer reflektierenden Oberfläche nahe der Fahrzeugfront 31 erzeugt wird und endet mit der Dopplerfrequenz f_{D5}, die an einer reflektierenden Oberfläche am Ende der Fahrzeugflanke 32 erzeugt wird. Zwischen den Dopplerfrequenzen f_{D1} und f_{D5} werden die weiteren Dopplerfrequenzen f_{D2}, f_{D3} und f_{D4} erfasst, die an reflektierenden Oberflächen des Fahrzeugs 3 entstehen, die sich zwischen der Fahrzeugfront 31 und dem Ende der Fahrzeugflanke 32 befinden. Bei frühen Messzeitpunkten kann davon ausgegangen werden, dass die Dopplerfrequenzen f_{D3} bis f_{D5} noch nicht erfassbar sind, da diese an der Fahrzeugflanke 32 entstehen, die zu diesen Messzeitpunkten für das Radargerät 1 nicht sichtbar ist. Bei real erfassten Messsignalen 4 befinden sich in den Zwischenräumen zwischen den Dopplerfrequenzen f_{D1} bis f_{D5}, neben den Dopplerfrequenzen f_{D2}, f_{D3} und f_{D4} noch eine Vielzahl weiterer Dopplerfrequenzen f_{D}, die in Fig. 2 zur Vereinfachung nicht dargestellt werden.

Kurz vor dem Austritt aus dem Radarkegel 12 bewegt sich das Fahrzeug 3 auf der Fahrbahn 2 am Radargerät 1 vorbei, sodass die Bahngeschwindigkeit sehr stark zunimmt und die Radialgeschwindigkeit sehr stark abnimmt. Der Abfall der Radialgeschwindigkeit ist zu diesem Messzeitpunkt maximal. Sobald das Fahrzeug 3 den Radarkegel 12 verlässt, können keine Reflexionen mehr erfasst werden. Das Messsignal 4 weist deshalb einen Endbereich EB auf, in dem die Aufzeichnungen der unterschiedlichen Dopplerfrequenzen f_{D1} bis f_{D5} enden. Durch die Längenausdehnung des Fahrzeugs 3 treten die über die Länge des Fahrzeugs 3 verteilten reflektierenden Oberflächen zeitlich nacheinander aus dem Radarkegel 12 aus, sodass es im Endbereich EB zu einer starken zeitlichen Auffächerung der Messsignale 4 kommt. Die zeitliche Ausdehnung der Auffächerung ist proportional zur Länge des Fahrzeugs 3.

In einem vierten Verfahrensschritt wird in dem Spektrogramm ein Bewertungsbereich BB der Messsignale 4 ermittelt, in dem die Spektralverteilung der Dopplerfrequenzen f_{D} eine maximale Bandbreite aufweist. Wie anhand von Fig. 2 zu erkennen ist, kann der Bewertungsbereich BB i. d. R. am Ende des Mittenbereichs MB des Verlaufs der Messsignale 4 gefunden werden, kurz bevor das Fahrzeug 3 beginnt den Radarkegel 12 zu verlassen. Im Bewertungsbereich BB wird wenigstens ein Messzeitpunkt als Bewertungszeitpunkt t_{B} festgelegt, an dem neben allen ermittelten Dopplerfrequenzen f_{D} weitere aus den Messsignalen 4 ableitbare Signalkomponenten ausgelesen oder ermittelt werden. Zu den weiteren Signalkomponenten gehören, die Signalamplituden SA der erfassten Dopplerfrequenzen f_{D} sowie die Radialentfernungen RE und die Objektwinkel γ zu den räumlich verteilten, reflektierenden Oberflächen des Fahrzeugs 3 an denen die erfassten Dopplerfrequenzen f_{D} erzeugt wurden. Die Signalkomponenten werden anschließend einer detaillierten Auswertung zugeführt. Die Auswertung erfolgt für jede der Signalkomponenten getrennt, indem die entsprechende Signalkomponente als Funktion über die Dopplerfrequenz f_{D}, in jeweils einem Frequenzspektrum aufgetragen und abgespeichert wird. Für die Auswertung werden nur Abschnitte der Frequenzspektren verwendet, in dem die erforderlichen Informationen enthalten sind. Diese Abschnitte wurden zuvor experimentell ermittelt. Die restlichen Abschnitte der Frequenzspektren brauchen bei der Auswertung nicht weiter beachtet werden.

Die detaillierte Auswertung kann prinzipiell auch zu früheren Messzeitpunkten, außerhalb des Bewertungsbereichs BB erfolgen. Aufgrund der höheren spektralen Dichte nimmt dort jedoch die Eindeutigkeit der Signalkomponenten und damit die Zuverlässigkeit der Auswertung ab. Zu späteren Messzeitpunkten, außerhalb des Bewertungsbereichs BB, ist die detaillierte Auswertung nicht mehr möglich, da hier das Fahrzeug 3 bereits den Radarkegel 12 verlässt und so nicht mehr alle Dopplerfrequenzen f_{D} zur Auswertung zur Verfügung stehen.

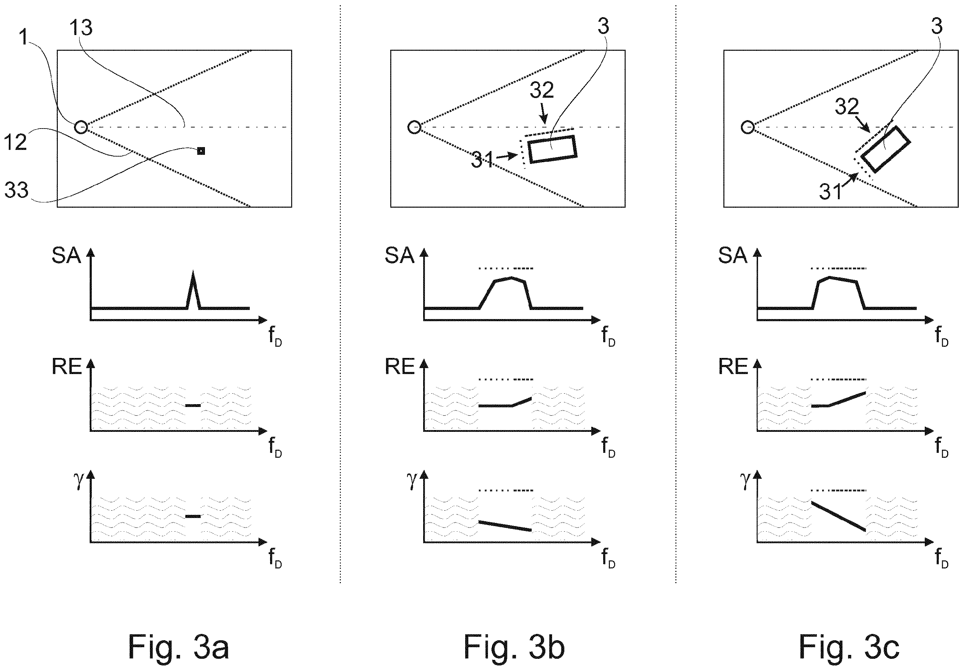

Die detaillierte Auswertung der Signalkomponenten soll anhand der in den **Fig. 3a bis 3c** dargestellten Fälle erläutert werden.

Zum besseren Verständnis wird in Fig. 3a zunächst die Auswertung der Signalkomponenten des idealen Punktreflektors 33 gezeigt. Die Anordnung des Punktreflektors 33 gegenüber dem Radargerät 1 ist in der oberen Abbildung in einer Prinzipdarstellung gezeigt. Aufgrund der fehlenden räumlichen Ausdehnung besitzt der Punktreflektor 33 zum Bewertungszeitpunkt t_{B} (und beim Punktreflektor 33 auch zu allen anderen Messzeitpunkten) nur eine, die Radarstrahlung 11 reflektierende Oberfläche in einer einzigen Radialentfernung RE zum Radargerät 1. Deshalb erzeugt der Punktreflektor 33 auch nur eine Dopplerfrequenz f_{D} mit einer Signalamplitude SA, ohne spektrale Bandbreite. Weiterhin kann auch nur eine Radialentfernung RE und ein Objektwinkel γ ermittelt werden. In den Frequenzspektren der Radialentfernung RE und des Objektwinkels γ wird deshalb auch nur jeweils ein Messwert bei einer Dopplerfrequenz f_{D} dargestellt.

In den Fig. 3b und 3c wird die Auswertung der Signalkomponenten des Fahrzeugs 3 gezeigt. Die Prinzipdarstellungen zeigen den quaderförmigen Umriss des Fahrzeugs 3 in einer Ansicht von oben, das sich in einem Radarkegel 12 in einer wenigstens annähernd gleichen Radialentfernung RE aber unterschiedlichen Fahrzeugwinkeln ε (nur in Fig. 1 dargestellt), die das Fahrzeug 3 jeweils mit seiner Längsachse, gleich der Fahrtrichtung mit der Richtung der radialen Entfernung zum Radargerät 1 einschließt. Das Fahrzeug 3 wird damit vom Radargerät 1 aus unterschiedlichen Blickwinkeln gesehen. Solche Änderungen des Fahrzeugwinkels ε entstehen bei der Durchfahrt des Fahrzeugs 3 durch den Radarkegel 12.

In **Fig. 3b** werden die zum Bewertungszeitpunkt t_{B} erfassten Signalkomponenten des Fahrzeugs 3 dargestellt, dessen Längsachse in einem flachen Fahrzeugwinkel ε ausgerichtet ist, sodass die Radarstrahlung 11 im wesentlichen an der Fahrzeugfront 31 (mit einer gepunkteten Linie angedeutet) und nur zu einem geringen Anteil an der Fahrzeugflanke 32 (mit einer gestrichelten Linie angedeutet) reflektiert wird. Durch die räumliche Ausdehnung trägt eine Vielzahl räumlich verteilter, reflektierender Oberflächen (Reflektoren) zur Bildung des Messsignals 4 bei, die im Gegensatz zum Punktreflektor 33 zu einer spektralen Bandbreite in den Frequenzspektren der Signalkomponenten führen.

Das Frequenzspektrum der Signalamplituden SA, das heißt, die Funktion der Signalamplituden SA über Dopplerfrequenz f_{D}, zeigt zwei charakteristische Abschnitte. In dem Abschnitt der niedrigeren Dopplerfrequenzen f_{D} ist der Frequenzverlauf durch einen nahezu linearen Anstieg der Signalamplituden SA gekennzeichnet. Dieser Anstieg kann den an der Fahrzeugfront 31 erzeugten Reflexionen zugeordnet werden, da die an der Fahrzeugfront 31 gemessenen Radialgeschwindigkeiten im Gegensatz zu den an der Fahrzeugflanke 32 gemessenen, aufgrund des größeren Anteils der Bahngeschwindigkeit, geringer sind. Die maximalen Signalamplituden SA werden an der zum Radargerät 1 weisenden Ecke des Fahrzeugs 3 und deren Übergängen zur Fahrzeugfront 31 und Fahrzeugflanke 32 erreicht. Hier ist der Anteil der rechtwinklig zu der gedachten radialen Verbindung zum Radargerät 1 ausgerichteten Oberflächen besonders hoch, sodass die Radarstrahlung 11 besonders gut reflektiert wird. Vom Maximum aus fallen die Signalamplituden SA zu den höheren Dopplerfrequenzen f_{D} hin wieder ab. Der Abfall der Signalamplitude SA wird durch die (im Gegensatz zur Fahrzeugecke) weniger direkt auf das Radar zeigenden Reflektoren erzeugt. Die höhere Radialgeschwindigkeit dagegen führt zu der bereits angesprochenen höheren spektralen Bandbreite.

Das Frequenzspektrum der Radialentfernung RE, das heißt die Funktion der Radialentfernung RE über die Dopplerfrequenz f_{D}, zeigt ebenfalls wieder zwei charakteristische Abschnitte. Im Abschnitt niedrigerer Dopplerfrequenzen f_{D} ist die Radialentfernung RE nahezu unverändert. Dieser Abschnitt wird durch die an der Fahrzeugfront 31 erzeugten Reflexionen gebildet. Da die Fahrzeugfront 31 nahezu orthogonal zu der gedachten radialen Verbindung zum Radargerät 1 orientiert ist, treten an der Fahrzeugfront 31 keine wesentlichen Unterschiede in der Radialentfernung RE auf. Beim Übergang von der Fahrzeugfront 31 auf die Fahrzeugflanke 32 nehmen die Radialentfernungen RE entsprechend der Länge und den damit verbundenen Objektwinkeländerungen zur Symmetrieachse 13 des angemessenen Fahrzeugs 3 zu. Im Abschnitt der höheren Dopplerfrequenzen f_{D} weist die Funktion daher einen Anstieg auf. Das Frequenzspektrum ist im Abschnitt des Anstiegs der Radialentfernung RE schmaler, weil durch den schrägen Winkel die Änderung der Radialgeschwindigkeit geringer ist. Die Signalstärke (reflektierte Radarstrahlung) hat keinen Einfluss auf die Breite sondern nur auf die Höhe.

Das Frequenzspektrum der Objektwinkel γ, das heißt, die Funktion der Objektwinkel γ über die Dopplerfrequenz f_{D}, ist durch einen linear abfallenden Objektwinkel γ gekennzeichnet. Der Abfall ist dabei ein Ausdruck für die Länge und Breite des Fahrzeugs 3, die aus der Perspektive des Radargeräts 1 durch den Fahrzeugwinkel ε vom Radargerät 1 erfasst wird.

In **Fig. 3c** sind die Signalkomponenten des Fahrzeugs 3 nochmals dargestellt. Im Unterschied zur Darstellung in Fig. 3b ist die Längsachse des Fahrzeug 3 hier in einem steilen Fahrzeugwinkel ε ausgerichtet, sodass die Radarstrahlung 11 zu einem größeren Anteil an der Fahrzeugflanke 32 die (mit einer gestrichelten Linie angedeutet) und zu einem geringeren Anteil an der Fahrzeugfront 31 (mit einer gepunkteten Linie angedeutet) reflektiert wird.

Entsprechen der von der Fahrzeugfront 31 und der Fahrzeugflanke 32 stammenden Anteile der zur Reflexion der Radarstrahlung 11 beitragenden reflektierenden Oberflächen ändern sich auch die Aufteilung der charakteristischen Abschnitte in den Frequenzspektren der Signalamplitude SA und der Radialentfernung RE. Bei einem ähnlichen Signalverlauf ist nun der Anteil des an der Fahrzeugfront 31 aufgenommenen Frequenzspektrums deutlich schmaler als der an der Fahrzeugflanke 32 aufgenommene Anteil.

Im Frequenzspektrum der Objektwinkel γ zeigt der Frequenzverlauf einen deutlich steileren Anstieg des Objektwinkels y.

Wie der Vergleich der Frequenzspektren bei unterschiedlichen Fahrzeugwinkeln ε zeigt, ist der Verlauf der ausgewerteten Signalkomponente typisch für eine bestimmte Ausrichtung und Länge des Fahrzeugs 3.

Die Klassifizierung des angemessenen Fahrzeugs 3 erfolgt in einem fünften Verfahrensschritt. Dazu werden die für das Fahrzeug 3 ermittelten Frequenzspektren mit zuvor anhand von Modelfahrzeugen, das heißt Fahrzeugen deren Klassifikationszuordnung bekannt ist, ermittelten und abgespeicherten Frequenzspektren verglichen, die in Form von Vergleichsmodellen VM vorliegen.

Damit ein direkter Vergleich möglich ist, wurden die Vergleichsmodelle VM zuvor mit einem Radargerät 1 angelernt, welches genauso zur Fahrbahn 2 angeordnet war, wie das Radargerät 1 jetzt zur Verfahrensdurchführung aufgestellt wurde und die Frequenzspektren wurden aus den Messsignalen zu einem Messzeitpunkt abgeleitet, bei welchem sich das Vergleichsmodell VM in einer gleichen Radialentfernung RE befand. Die Vergleichsmodelle VM besitzen daher bereits eine Zuordnung zu einer Fahrzeugklasse. Wenn eine Übereinstimmung des angemessenen Fahrzeugs 3 mit einem der Vergleichsmodelle VM festgestellt wird, kann das angemessene Fahrzeug 3 der entsprechenden Fahrzeugklasse zugewiesen werden. Das angemessene Fahrzeug 3 ist somit ebenfalls klassifiziert.

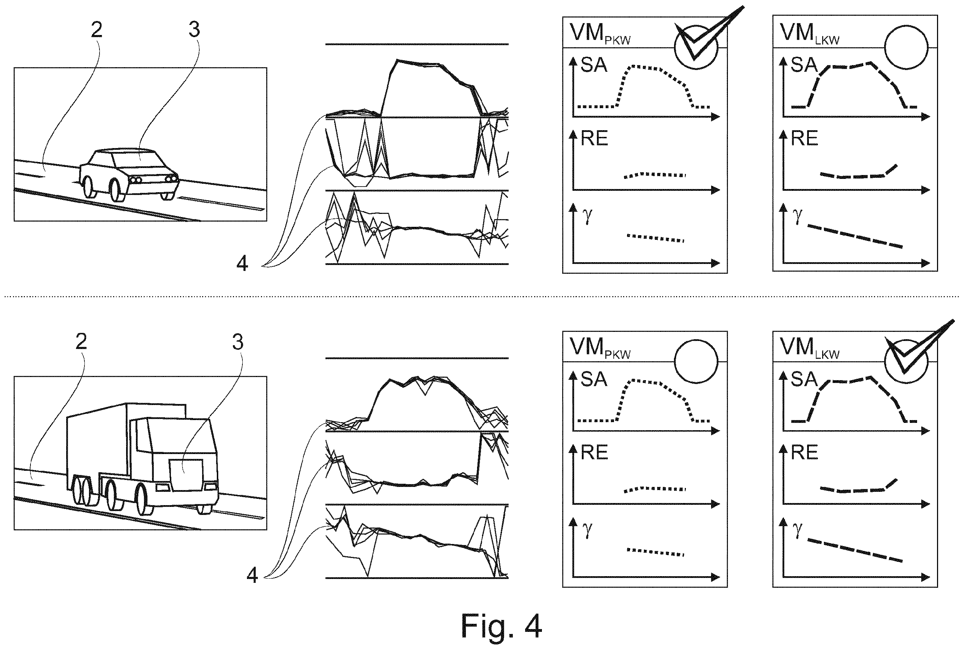

In **Fig. 4** ist die Klassifizierung von sich in der Fahrzeuglänge unterscheidender Fahrzeuge 3 dargestellt. Die aus den Messsignalen 4 als Funktionen über die Dopplerfrequenz f_{D} abgeleiteten Frequenzspektren der Signalamplituden SA, der Radialentfernungen RE und des Objektwinkels y (in Fig. 4 in der zweiten Spalte dargestellt) werden mit den Vergleichsmodellen VM (in Fig. 4 in der dritten und vierten Spalte dargestellt) verglichen. In Fig. 4 werden zwei Vergleichsmodelle VM verwendet, eins für die Fahrzeugklasse der PKWs (gepunktete Linie) und eins für die Fahrzeugklasse der LKWs (gestrichelte Linie). Der Vergleich der für das in der oberen Hälfte von Fig. 4 dargestellte Fahrzeug 3 ermittelten Frequenzspektren mit den Frequenzspektren der Vergleichsmodelle VM ergibt eine maximale Übereinstimmung mit dem Vergleichsmodell VM des PKWs (dritte Spalte). Dieses Fahrzeug 3 kann somit als PKW klassifiziert werden. Die für das in der unteren Hälfte von Fig. 4 dargestellte Fahrzeug 3 ermittelten Frequenzspektren weisen eine maximale Übereinstimmung mit dem Vergleichsmodell VM des LKWs (vierte Spalte) auf. Dieses Fahrzeug 3 kann somit als LKW klassifiziert werden.

Die Vergleichsmodelle VM werden bevorzugt während des Verfahrens mit Hilfe aus einer für die unterschiedlichen Fahrzeugklassen jeweils vorgegebenen Formel und den aktuellen Parametern, die aus der Aufstellung des Radargerätes 1 und den Messsignalen 4 gewonnen werden, nämlich die Radialgeschwindigkeiten, Radialentfernungen RE, der Fahrzeugwinkel ε und die Objektwinkel y, berechnet.

Die Vergleichsmodelle VM können auch bei einer festen Anordnung des Radargeräts 1 zur Fahrbahn 2, aus zuvor aufgenommenen Verläufen der Messsignale 4 erzeugt werden. Dazu wird in den zuvor aufgenommenen Verläufen der Messsignale 4 zunächst die Länge der Fahrzeuge 3 ermittelt. Die Länge der Fahrzeuge 3 wird am Ende des Mittenbereichs MB des Verlaufes der Messsignale 4 aus der Bandbreite der Spektralverteilung des Verlaufes der Messsignale 4 (z. B. zum Bewertungszeitpunkt t_{B}) ermittelt, wobei große Fahrzeuge 3 eine große Bandbreite und kurze Fahrzeuge 3 eine kleine Bandbreite aufweisen.

Es ist auch möglich, die Länge der Fahrzeuge 3 in Abhängigkeit von der Radialgeschwindigkeit aus der Zeitdauer zu ermitteln, die das Fahrzeug 3 benötigt um sich aus dem Radarkegel 12 heraus zu bewegen. Die Zeitdauer kann am Ende des Verlaufes der Messsignale 4 aus der Breite des Endbereichs EB ermittelt werden.

Entsprechend der ermittelten Länge der Fahrzeuge 3 erfolgt mittels einer Wahrscheinlichkeitsbetrachtung eine Einordnung der zuvor aufgenommenen oder zeitgleich ermittelten Verläufe der Messsignale 4 in unterschiedliche Gruppen. Durch eine (manuelle) Bewertung der in den Gruppen eingeordneten Fahrzeuge 3 werden die Gruppen und damit die darin eingeordneten Verläufe der Messsignale 4 bzw. Fahrzeuge 3 einer entsprechenden Fahrzeugklasse zugeordnet.

Zur Erzeugung der Vergleichsmodelle VM werden alle in eine Gruppe eingeordneten, klassifizierten Verläufe von Messsignalen 4 über deren gesamten zeitlichen Verlauf gewichtet und akkumuliert. Im akkumulierten Verlauf der Messsignale 4 wird der Abschnitt der größten spektralen Bandbreite ermittelt und dort zu einem Bewertungszeitpunkt t_{B} die ableitbaren Signalkomponenten (Signalamplitude SA, Radialentfernung RE, Objektwinkel y) ermittelt. Die aus den Signalkomponenten erzeugten einzelnen Frequenzspektren beinhalten nunmehr ein der Fahrzeugklasse entsprechendes durchschnittliches Frequenzspektrum und können als Vergleichsmodelle VM verwendet werden. Für die Vergleichsmodelle VM ist es dabei ausreichend nur charakteristische Abschnitte, z. B. Anstiege oder Knickstellen der Frequenzspektren zu verwenden und die verbleibenden Abschnitte, wie in Fig. 3 in den Frequenzspektren der Radialentfernung RE und des Objektwinkels y gezeigt, zu maskieren.

Vergleichsmodelle VM können auch aus einer theoretischen Berechnung heraus gewonnen werden. Dazu werden die Aufstellbedingungen (horizontaler Aufstellabstand hAA, horizontaler Aufstellwinkel α, vertikale Aufstellhöhe vAH und vertikaler Aufstellwinkel β) des Radargeräts 1 an einem realen Einsatzort als Messsignale 4 erfasst. Zur Darstellung der Fahrzeuge 3 werden vereinfachte, maßstabsgetreue Fahrzeugmodelle (z. B. die Oberflächen einer Quaderform) generiert. Entsprechend der Aufstellbedingungen und der Fahrzeugmodelle können theoretische Reflexionsantworten berechnet werden, aus denen die Vergleichsmodelle VM erstellt werden können.

Prinzipiell ist das Verfahren auch dann anwendbar, wenn die Aufstellbedingungen des Radargeräts 1 gegenüber der Fahrbahn 2 nicht genau bekannt sind, da im Verfahren ausschließlich die auf das Radargerät 1 bezogenen Messsignale 4 (Dopplerfrequenz f_{D}, Radialentfernung RE und Objektwinkel y) zur Klassifizierung der Fahrzeuge 3 verwendet werden. Der Radarkegel 12 kann deshalb mit einem gewissen Toleranzbereich zur Fahrbahn 2 ausgerichtet werden, in dem die benötigten Messsignale 4 noch mit ausreichender Sicherheit erfasst werden können. Bei einer Anordnung des Radargeräts 1, die nicht den Aufstellbedingungen entspricht, bei denen die Vergleichsmodelle VM erstellt wurden, ist es jedoch immer erforderlich vor Anwendung des Verfahrens neue Vergleichsmodelle VM zu erstellen, die den aktuellen Aufstellbedingungen entsprechen.

Eine Anordnung des Radargeräts 1 ohne Kenntnis der Aufstellbedingungen hat außerdem den Nachteil, dass die Fahrzeuggeschwindigkeit nicht ermittelt werden kann. Damit entfällt beispielsweise die Möglichkeit, Geschwindigkeitsverstöße der Fahrzeuge 3 zu erkennen und diese in Abhängigkeit der Klassifikation der Fahrzeuge 3 auszuwerten. Grundsätzlich können die Aufstellbedingung aber auch vom Radargerät 1 automatisch gelernt werden, so dass es dann auch für die Fahrzeuggeschwindigkeit wieder messfähig ist.

### Bezugszeichenliste

- 1: Radargerät
- 11: Radarstrahlung
- 12: Radarkegel
- 13: Symmetrieachse

- 2: Fahrbahn

- 3: Fahrzeug
- 31: Fahrzeugfront
- 32: Fahrzeugflanke
- 33: Punktreflektor
- 34: Fahrtrichtung

- 4: Messsignal

- BB: Bewertungsbereich
- AB: Anfangsbereich
- MB: Mittenbereich
- EB: Endbereich
- t: Messzeit
- t_{B}: Bewertungszeitpunkt
- SA: Signalamplitude
- RE: Radialentfernung
- hAA: horizontaler Aufstellabstand
- vAH: vertikale Aufstellhöhe
- f_{D}: Dopplerfrequenz
- VM: Vergleichsmodell

- α: horizontaler Aufstellwinkel
- y: Objektwinkel
- ε: Fahrzeugwinkel

## Patentansprüche

1. Verfahren zum Klassifizieren von Fahrzeugen (3), bei dem Fahrzeuge (3) beim Durchfahren eines durch Radarstrahlung (11) gebildeten Radarkegels (12) angemessen werden, indem die mit Radarstrahlung (11) beaufschlagten Oberflächen der Fahrzeuge (3) die Radarstrahlung (11) reflektieren und Messsignale (4) mit Frequenzen entsprechend der Dopplerverschiebung generieren, mit folgenden Verfahrensschritten:
a) Anordnen eines winkelauflösenden Radargerätes (1), welches Messsignale (4) mit Frequenzen entsprechend der Dopplerverschiebung liefert, aus denen Radialentfernungen (RE), Objektwinkel (γ) und Radialgeschwindigkeiten ableitbar sind, in einer vertikalen Aufstellhöhe (vAH) zur Fahrbahnoberfläche einer Fahrbahn (2) sowie einem horizontalen spitzen Aufstellwinkel (α) zu einem Fahrbahnrand der Fahrbahn (2),
b) Aussenden einer einen Radarkegel (12) bildenden Radarstrahlung (11) mittels des Radargerätes (1) und Erfassen der Messsignale (4) zu mehreren Messzeitpunkten in einer Messzeit (t), von wenigstens einem den Radarkegel (12) durchfahrenden Fahrzeug (3),
c) Abspeichern der Frequenzen der erfassten Messsignale (4) angemessener Fahrzeuge (3) als Funktionen über die Messzeit (t) und Bilden eines Spektrogramms pro Fahrzeug (3), in Form eines zeitlichen Verlaufs der Dopplerfrequenzen der erfassten Messsignale angemessener Fahrzeuge,
d) Überprüfen der Spektrogramme auf jeweils einen Bewertungsbereich (BB) mit maximaler Bandbreite der Frequenz und Festlegen wenigstens eines Messzeitpunkts als Bewertungszeitpunkt (t_{B}) im jeweiligen Bewertungsbereich (BB),
e) Vergleich dieser Bewertungsbereiche (BB) mit Bewertungsbereichen abgespeicherter Spektrogramme für verschiedene Fahrzeugklassen, und Zuordnung zu dem ähnlichsten, um damit die durchfahrenden Fahrzeuge (3) zu klassifizieren und
f) Ableiten von Objektwinkeln (γ) aus den Messsignalen (4) zu dem wenigstens einen Bewertungszeitpunkt (t_{B}) innerhalb der Bewertungsbereiche (BB) mit maximaler Bandbreite, wobei die jeweils abgeleiteten Objektwinkel (y)für den betreffenden Bewertungszeitpunkt (t_{B}) jeweils als Funktion über die Frequenz abgespeichert werden und der Verlauf der Funktion mit für verschiedene Fahrzeugklassen abgespeicherten Vergleichsmodellen (VM) verglichen wird, um die Klassifizierung der Fahrzeuge (3) zu verifizieren.

2. Verfahren zum Klassifizieren von Fahrzeugen (3), bei dem Fahrzeuge (3) beim Durchfahren eines durch Radarstrahlung (11) gebildeten Radarkegels (12) angemessen werden, indem die mit Radarstrahlung (11) beaufschlagten Oberflächen der Fahrzeuge (3) die Radarstrahlung (11) reflektieren und Messsignale (4) mit Frequenzen entsprechend der Dopplerverschiebung generieren, mit folgenden Verfahrensschritten:
a) Anordnen eines winkelauflösenden Radargerätes (1), welches Messsignale (4) mit Frequenzen entsprechend der Dopplerverschiebung liefert, aus denen Radialentfernungen (RE), Objektwinkel (γ) und Radialgeschwindigkeiten ableitbar sind, in einer vertikalen Aufstellhöhe (vAH) zur Fahrbahnoberfläche einer Fahrbahn (2) sowie einem horizontalen spitzen Aufstellwinkel (α) zu einem Fahrbahnrand der Fahrbahn (2),
b) Aussenden einer einen Radarkegel (12) bildenden Radarstrahlung (11) mittels des Radargerätes (1) und Erfassen der Messsignale (4) zu mehreren Messzeitpunkten in einer Messzeit (t), von wenigstens einem den Radarkegel (12) durchfahrenden Fahrzeug (3),
c) Abspeichern der Frequenzen der erfassten Messsignale (4) angemessener Fahrzeuge (3) als Funktionen über die Messzeit (t) und Bilden eines Spektrogramms pro Fahrzeug (3), in Form eines zeitlichen Verlaufs der Dopplerfrequenzen der erfassten Messsignale angemessener Fahrzeuge,
d) Überprüfen der Spektrogramme auf jeweils einen Bewertungsbereich (BB) mit maximaler Bandbreite der Frequenz und Festlegen wenigstens eines Messzeitpunkts als Bewertungszeitpunkt (t_{B}) im jeweiligen Bewertungsbereich BB,
e) Vergleich dieser Bewertungsbereiche (BB) mit Bewertungsbereichen abgespeicherter Spektrogramme für verschiedene Fahrzeugklassen, und Zuordnung zu dem ähnlichsten, um damit die durchfahrenden Fahrzeuge (3) zu klassifizieren und
f) Ableiten von Radialentfernungen (RE) aus den Messsignalen (4) zu dem wenigstens einem Bewertungszeitpunkt (t_{B}) innerhalb der Bewertungsbereiche (BB) mit maximaler Bandbreite, wobei die jeweils abgeleiteten Radialentfernungen (RE) für den betreffenden Bewertungszeitpunkt (t_{B}) jeweils als Funktion über die Frequenz abgespeichert werden und der Verlauf der Funktionen mit für verschiedene Fahrzeugklassen abgespeicherten Vergleichsmodellen (VM) verglichen werden, um die Klassifizierung der Fahrzeuge (3) zu verifizieren.

3. Verfahren zum Klassifizieren von Fahrzeugen (3), bei dem Fahrzeuge (3) beim Durchfahren eines durch Radarstrahlung (11) gebildeten Radarkegels (12) angemessen werden, indem die mit Radarstrahlung (11) beaufschlagten Oberflächen der Fahrzeuge (3) die Radarstrahlung (11) reflektieren und Messsignale (4) mit Frequenzen entsprechend der Dopplerverschiebung generieren, mit folgenden Verfahrensschritten:
a) Anordnen eines winkelauflösenden Radargerätes (1), welches Messsignale (4) mit Frequenzen entsprechend der Dopplerverschiebung liefert, aus denen Radialentfernungen (RE), Objektwinkel (γ) und Radialgeschwindigkeiten ableitbar sind, in einer vertikalen Aufstellhöhe (vAH) zur Fahrbahnoberfläche einer Fahrbahn (2) sowie einem horizontalen spitzen Aufstellwinkel (α) zu einem Fahrbahnrand der Fahrbahn (2),
b) Aussenden einer einen Radarkegel (12) bildenden Radarstrahlung (11) mittels des Radargerätes (1) und Erfassen der Messsignale (4) zu mehreren Messzeitpunkten in einer Messzeit (t), von wenigstens einem den Radarkegel (12) durchfahrenden Fahrzeug (3),
c) Abspeichern der Frequenzen der erfassten Messsignale (4) angemessener Fahrzeuge (3) als Funktionen über die Messzeit (t) und Bilden eines Spektrogramms pro Fahrzeug (3), in Form eines zeitlichen Verlaufs der Dopplerfrequenzen der erfassten Messsignale angemessener Fahrzeuge,
d) Überprüfen der Spektrogramme auf jeweils einen Bewertungsbereich (BB) mit maximaler Bandbreite der Frequenz und Festlegen wenigstens eines Messzeitpunkts als Bewertungszeitpunkt (t_{B}) im jeweiligen Bewertungsbereich BB,
e) Vergleich dieser Bewertungsbereiche (BB) mit Bewertungsbereichen abgespeicherter Spektrogramme für verschiedene Fahrzeugklassen, und Zuordnung zu dem ähnlichsten, um damit die durchfahrenden Fahrzeuge (3) zu klassifizieren und
f) Abspeichern von Signalamplituden (SA) der Messsignale (4) aus den Messsignalen (4) zu dem wenigstens einem der Bewertungszeitpunkte (t_{B}) innerhalb der Bewertungsbereiche (BB) mit maximaler Bandbreite, wobei die Signalamplituden (SA) der Messsignale (4) für den betreffenden Bewertungszeitpunkt (t_{B}) jeweils als Funktion über die Frequenz abgespeichert werden und der Verlauf der Funktionen mit für verschiedene Fahrzeugklassen abgespeicherten Vergleichsmodellen (VM) verglichen werden, um die Klassifizierung der Fahrzeuge (3)zu verifizieren.

4. Verfahren nach den Ansprüchen 1, 2 oder 3, **dadurch gekennzeichnet, dass** aus dem Vergleich aller gebildeten Funktionen mit abgespeicherten Vergleichsmodellen (VM) eine Modellierung der Fahrzeuggröße erfolgt.

## Claims

1. Method for classifying vehicles (3), wherein vehicles (3) are measured when driving through a radar cone (12) formed by radar radiation (11) by way of the surfaces of the vehicles (3) onto which radar radiation (11) impinges reflecting the radar radiation (11) and generating measurement signals (4) with frequencies corresponding to the Doppler shift, having the following method steps:
a) arranging an angle-resolving radar device (1) which provides measurement signals (4) with frequencies corresponding to the Doppler shift from which radial distances (RE), object angles (γ) and radial velocities are derivable at a vertical placement height (vAH) with respect to the road surface of a road (2) and at a horizontal acute placement angle (α) with respect to a road edge of the road (2),
b) emitting radar radiation (11), which forms a radar cone (12), using the radar device (1) and capturing the measurement signals (4), from at least one vehicle (3) driving through the radar cone (12), at a plurality of measurement time points within a measurement time (t),
c) storing the frequencies of the captured measurement signals (4) of measured vehicles (3) as functions over the measurement time (t) and creating a spectrogram per vehicle (3) in the form of a time profile of the Doppler frequencies of the captured measurement signals of measured vehicles,
d) checking the spectrograms for in each case one assessment range (BB) having maximum bandwidth of the frequency and defining at least one measurement time point as the assessment time point (t_{B}) in the respective assessment range (BB),
e) comparing said assessment ranges (BB) to assessment ranges of stored spectrograms for different vehicle classes and assigning them to the one that is most alike in order to thereby classify the vehicles (3) driving through, and
f) deriving object angles (γ) from the measurement signals (4) at the at least one assessment time point (t_{B}) within the assessment ranges (BB) having maximum bandwidth, wherein the respectively derived object angles (γ) are stored for the relevant assessment time point (t_{B}) in each case as a function over the frequency, and the profile of the function is compared to comparison models (VM) stored for different vehicle classes to verify the classification of the vehicles (3).

2. Method for classifying vehicles (3), wherein vehicles (3) are measured when driving through a radar cone (12) formed by radar radiation (11) by way of the surfaces of the vehicles (3) onto which radar radiation (11) impinges reflecting the radar radiation (11) and generating measurement signals (4) with frequencies corresponding to the Doppler shift, having the following method steps:
a) arranging an angle-resolving radar device (1) which provides measurement signals (4) with frequencies corresponding to the Doppler shift from which radial distances (RE), object angles (γ) and radial velocities are derivable at a vertical placement height (vAH) with respect to the road surface of a road (2) and at a horizontal acute placement angle (α) with respect to a road edge of the road (2),
b) emitting radar radiation (11), which forms a radar cone (12), using the radar device (1) and capturing the measurement signals (4), from at least one vehicle (3) driving through the radar cone (12), at a plurality of measurement time points within a measurement time (t),
c) storing the frequencies of the captured measurement signals (4) of measured vehicles (3) as functions over the measurement time (t) and creating a spectrogram per vehicle (3) in the form of a time profile of the Doppler frequencies of the captured measurement signals of measured vehicles,
d) checking the spectrograms for in each case one assessment range (BB) having maximum bandwidth of the frequency and defining at least one measurement time point as the assessment time point (t_{B}) in the respective assessment range (BB),
e) comparing said assessment ranges (BB) to assessment ranges of stored spectrograms for different vehicle classes and assigning them to the one that is most alike in order to thereby classify the vehicles (3) driving through, and
f) deriving radial distances (RE) from the measurement signals (4) at the at least one assessment time point (t_{B}) within the assessment ranges (BB) having maximum bandwidth, wherein the respectively derived radial distances (RE) are stored for the relevant assessment time point (t_{B}) in each case as a function over the frequency, and the profile of the functions is compared to comparison models (VM) stored for different vehicle classes to verify the classification of the vehicles (3).

3. Method for classifying vehicles (3), wherein vehicles (3) are measured when driving through a radar cone (12) formed by radar radiation (11) by way of the surfaces of the vehicles (3) onto which radar radiation (11) impinges reflecting the radar radiation (11) and generating measurement signals (4) with frequencies corresponding to the Doppler shift, having the following method steps:
a) arranging an angle-resolving radar device (1) which provides measurement signals (4) with frequencies corresponding to the Doppler shift from which radial distances (RE), object angles (γ) and radial velocities are derivable at a vertical placement height (vAH) with respect to the road surface of a road (2) and at a horizontal acute placement angle (α) with respect to a road edge of the road (2),
b) emitting radar radiation (11), which forms a radar cone (12), using the radar device (1) and capturing the measurement signals (4), from at least one vehicle (3) driving through the radar cone (12), at a plurality of measurement time points within a measurement time (t),
c) storing the frequencies of the captured measurement signals (4) of measured vehicles (3) as functions over the measurement time (t) and creating a spectrogram per vehicle (3) in the form of a time profile of the Doppler frequencies of the captured measurement signals of measured vehicles,
d) checking the spectrograms for in each case one assessment range (BB) having maximum bandwidth of the frequency and defining at least one measurement time point as the assessment time point (t_{B}) in the respective assessment range (BB),
e) comparing said assessment ranges (BB) to assessment ranges of stored spectrograms for different vehicle classes and assigning them to the one that is most alike in order to thereby classify the vehicles (3) driving through, and
f) storing signal amplitudes (SA) of the measurement signals (4) from the measurement signals (4) at the at least one of the assessment time points (t_{B}) within the assessment ranges (BB) having maximum bandwidth, wherein the signal amplitudes (SA) of the measurement signals (4) are stored for the relevant assessment time point (t_{B}) in each case as a function over the frequency, and the profile of the functions is compared to comparison models (VM) stored for different vehicle classes to verify the classification of the vehicles (3).

4. Method according to Claims 1, 2 or 3, **characterized in that** the vehicle size is modelled on the basis of the comparison of all functions formed to stored comparison models (VM).

## Revendications

1. Procédé de classification de véhicules (3), dans lequel on mesure des véhicules (3) lors de la traversée d'un cône radar (12) formé par un rayonnement radar (11), du fait que les surfaces des véhicules (3) frappées par le rayonnement radar (11) réfléchissent le rayonnement radar (11) et génèrent des signaux de mesure (4) avec des fréquences correspondant au décalage Doppler, comprenant les étapes de procédé suivantes:
a) agencer un appareil radar à résolution angulaire (1), qui fournit des signaux de mesure (4) avec des fréquences correspondant au décalage Doppler, à partir desquels des distances radiales (RE), des angles d'objets (γ) et des vitesses radiales peuvent être déduits, à une hauteur de montage verticale (vAH) par rapport à la surface de chaussée d'une chaussée (2) ainsi qu'avec un angle de montage aigu horizontal (α) par rapport à un bord de chaussée de la chaussée (2),
b) émettre un rayonnement radar (11) formant un cône radar (12) au moyen de l'appareil radar (1) et détecter les signaux de mesure (4) à plusieurs instants de mesure dans la période de mesure (t), d'au moins un véhicule (3) traversant le cône radar (12),
c) mémoriser les fréquences des signaux de mesure détectés (4) de véhicules mesurés (3) sur la période de mesure (t) et former un spectrogramme par véhicule (3), sous la forme d'une évolution temporelle des fréquences Doppler des signaux de mesure détectés de véhicules mesurés,
d) contrôler les spectrogrammes chaque fois sur une plage d'évaluation (BB) avec une largeur de bande maximale de la fréquence et fixer au moins un instant de mesure comme point d'évaluation (t_{B}) dans la plage d'évaluation respective (BB),
e) comparer ces plages d'évaluation (BB) avec des plages d'évaluation de spectrogrammes mémorisés pour différentes classes de véhicules, et les associer au plus proche, afin de classifier ainsi les véhicules qui traversent (3), et
f) déduire des angles d'objets (γ) à partir des signaux de mesure (4) audit au moins un instant d'évaluation (t_{B}) à l'intérieur des plages d'évaluation (BB) avec une largeur de bande maximale, dans lequel on mémorise les angles d'objets (γ) respectivement déduits pour l'instant d'évaluation concerné (t_{B}) chaque fois sous forme de fonction de la fréquence et on compare l'allure de la fonction à des modèles de comparaison (VM) mémorisés pour différentes classes de véhicules, afin de vérifier la classification des véhicules (3).

2. Procédé de classification de véhicules (3), dans lequel on mesure des véhicules (3) lors de la traversée d'un cône radar ((12) formé par un rayonnement radar (11), du fait que les surfaces des véhicules (3) frappées par le rayonnement radar (11) réfléchissent le rayonnement radar (11) et génèrent des signaux de mesure (4) avec des fréquences correspondant au décalage Doppler, comprenant les étapes de procédé suivantes:
a) agencer un appareil radar à résolution angulaire (1), qui fournit des signaux de mesure (4) avec des fréquences correspondant au décalage Doppler, à partir desquels des distances radiales (RE), des angles d'objets (γ) et des vitesses radiales peuvent être déduits, à une hauteur de montage verticale (vAH) par rapport à la surface de chaussée d'une chaussée (2) ainsi qu'avec un angle de montage aigu horizontal (α) par rapport à un bord de chaussée de la chaussée (2),
b) émettre un rayonnement radar (11) formant un cône radar (12) au moyen de l'appareil radar (1) et détecter les signaux de mesure (4) à plusieurs instants de mesure dans la période de mesure (t), d'au moins un véhicule (3) traversant le cône radar (12),
c) mémoriser les fréquences des signaux de mesure détectés (4) de véhicules mesurés (3) sur la période de mesure (t) et former un spectrogramme par véhicule (3), sous la forme d'une évolution temporelle des fréquences Doppler des signaux de mesure détectés de véhicules mesurés,
d) contrôler les spectrogrammes chaque fois sur une plage d'évaluation (BB) avec une largeur de bande maximale de la fréquence et fixer au moins un instant de mesure comme point d'évaluation (t_{B}) dans la plage d'évaluation respective (BB),
e) comparer ces plages d'évaluation (BB) avec des plages d'évaluation de spectrogrammes mémorisés pour différentes classes de véhicules, et les associer au plus proche, afin de classifier ainsi les véhicules qui traversent (3), et
f) déduire des distances radiales (RE) à partir des signaux de mesure (4) audit au moins un instant d'évaluation (t_{B}) à l'intérieur des plages d'évaluation (BB) avec une largeur de bande maximale, dans lequel on mémorise les distances radiales (RE) respectivement déduites pour l'instant d'évaluation concerné (t_{B}) chaque fois sous forme de fonction de la fréquence et on compare l'allure des fonctions à des modèles de comparaison (VM) mémorisés pour différentes classes de véhicules, afin de vérifier la classification des véhicules (3).

3. Procédé de classification de véhicules (3), dans lequel on mesure des véhicules (3) lors de la traversée d'un cône radar ((12) formé par un rayonnement radar (11), du fait que les surfaces des véhicules (3) frappées par le rayonnement radar (11) réfléchissent le rayonnement radar (11) et génèrent des signaux de mesure (4) avec des fréquences correspondant au décalage Doppler, comprenant les étapes de procédé suivantes:
a) agencer un appareil radar à résolution angulaire (1), qui fournit des signaux de mesure (4) avec des fréquences correspondant au décalage Doppler, à partir desquels des distances radiales (RE), des angles d'objets (γ) et des vitesses radiales peuvent être déduits, à une hauteur de montage verticale (vAH) par rapport à la surface de chaussée d'une chaussée (2) ainsi qu'avec un angle de montage aigu horizontal (α) par rapport à un bord de chaussée de la chaussée (2),
b) émettre un rayonnement radar (11) formant un cône radar (12) au moyen de l'appareil radar (1) et détecter les signaux de mesure (4) à plusieurs instants de mesure dans la période de mesure (t), d'au moins un véhicule (3) traversant le cône radar (12),
c) mémoriser les fréquences des signaux de mesure détectés (4) de véhicules mesurés (3) sur la période de mesure (t) et former un spectrogramme par véhicule (3), sous la forme d'une évolution temporelle des fréquences Doppler des signaux de mesure détectés de véhicules mesurés,
d) contrôler les spectrogrammes chaque fois sur une plage d'évaluation (BB) avec une largeur de bande maximale de la fréquence et fixer au moins un instant de mesure comme point d'évaluation (t_{B}) dans la plage d'évaluation respective (BB),
e) comparer ces plages d'évaluation (BB) avec des plages d'évaluation de spectrogrammes mémorisés pour différentes classes de véhicules, et les associer au plus proche, afin de classifier ainsi les véhicules qui traversent (3), et
f) mémoriser des amplitudes de signal (SA) des signaux de mesure (4) à partir des signaux de mesure (4) audit au moins un des instants d'évaluation (t_{B}) à l'intérieur des plages d'évaluation (BB) avec une largeur de bande maximale, dans lequel on mémorise les amplitudes de signal (SA) des signaux de mesure (4) pour l'instant d'évaluation concerné (t_{B}) chaque fois sous forme de fonction de la fréquence et on compare l'allure des fonctions à des modèles de comparaison (VM) mémorisés pour différentes classes de véhicules, afin de vérifier la classification des véhicules (3).

4. Procédé selon les revendications 1, 2 ou 3, **caractérisé en ce que** l'on opère une modélisation de la taille de véhicules à partir de la comparaison de toutes les fonctions mémorisées avec des modèles de comparaison mémorisés (VM).
